# EUROPEAN PATENT APPLICATION

(11) **EP 0 908 128 A1**
(43) Date of publication of application: **14.04.1999**
(21) Application number: 98106101.3
(22) Date of filing: 03.04.1998
(51) Int. Cl.: A47J 19/02

(54) **Safety device for centrifugal extractors for domestic use of the type having a frustoconical drum**

(30) Priority: 10.10.1997 IT GE970084
(71) Applicant: Ariete S.p.A., 50040 Settimello di Calenzano (Firenze) (IT)
(72) Inventor: Baldacci, Lapo, 50129 Firenze (IT)
(74) Representative: Porsia, Attilio, Dr.

(57) **Abstract**

Method for making a safety system for centrifugal extractors for domestic use, of the type comprising a frustoconical drum (2) composed of two plastic base circles (102,302) and a perforated frustoconical intermediate wall (202), characterized in that at least the upper outer annulus (102), and/or a part attached to it, is completely surrounded at a short distance by a coaxial fixed annular wall (203,3) forming part of a well into which the said drum is introduced so that, in the event that the upper outer annulus, or the part attached thereto, breaks or gives way, it will almost immediately, as it expands, come into contact with the said coaxial wall, generating high frictional forces that will prevent further rotation, and hence bursting, of the drum (2).

## Description

The present invention relates to a method and to a safety device for performing said method for centrifugal extractors for domestic use of the type having a frustoconical drum.

Centrifugal extractors which are currently available on the market for domestic use can be divided into two basic categories: those in which the extraction drum is of cylindrical form and those in which the drum is of frustoconical form and consists basically of two base circles, made of plastic, and a frustoconical wall consisting of one or more perforated steel sheets whose edges are locked in position, during the moulding of the base circles, in these two circles. These sheets have been found to be highly dangerous as they can give rise to breakage of the drum and consequent injury to the user. This is because the frustoconical design means that when the drum is spinning, the upper outer annulus is subject to much greater centrifugal stresses than the stresses acting on the other parts. It is therefore this part which can break first. Breakage of the plastic outer annulus is also accelerated where the drum is frequently washed at high temperatures in a dishwasher or treated with bleach to restore its original colour after contact with staining foodstuffs. If the outer annulus is broken, the metal sheets forming the filter of the drum come free and, because of the high speeds of rotation, are flung violently out of the centrifugal extractor, breaking the lid and possibly injuring the user of the appliance.

This serious risk to which this type of centrifugal extractor is prone has led to the models in question being withdrawn from the market, but centrifugal extractors still present in people's homes may constitute a danger to their users.

In the method of the present invention, at least the upper outer annulus, or a part attached to it, is completely surrounded at a short distance by a coaxial fixed annular wall forming part of a well into which the said drum is introduced so that, in the event that the upper outer annulus, or the part attached thereto, breaks or gives way, it will almost immediately, as it expands, come into contact with the said coaxial wall, generating high frictional forces that will prevent further rotation, and hence bursting, of the drum.

In a preferred embodiment, the safety device for carrying out the above method consists of a plastic ring which may be thicker than, and is coaxial with, the outer annulus of the drum, and which, if the annulus breaks, will come into contact with the coaxial adjacent surface, generating high frictional forces that will oppose the rotation of the drum and therefore prevent it or parts thereof from flying out and causing damage.

In a second embodiment, the safety device according to the invention comprises an integral annular apron-like component extending down from the upper outer annulus and functioning in conjunction with the said fixed annular wall.

Further objects, advantages and features of the present invention will become clearer in the course of the following detailed description of certain preferred embodiments thereof depicted in the figures of the attached drawings, in which:
- Figure 1 shows a centrifugal extractor in front elevation and partially sectioned, containing a first embodiment of the device according to the invention;
- Figure 2 shows a front elevation in cross-section of part of the centrifugal extractor shown in Figure 1 containing a second embodiment of the device according to the invention;
- Figure 3 shows a top view of the safety device of Figure 2; and
- Figure 4 shows a top view of the device shown in Figure 3 in which the outer annulus of the drum has broken.

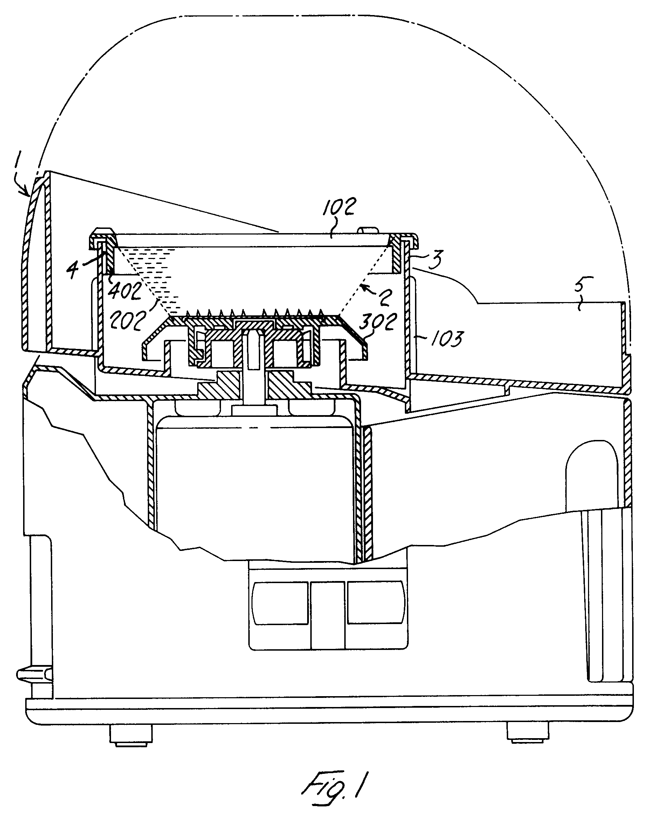

Shown in Figure 1 is a centrifugal extractor 1 having a frustoconical drum 2. The drum 2 is mounted in a cylindrical drum enclosure 3. The drum 2 is formed by a base 302 with a grating disc for juice extraction, and with an outer annulus 102 which, together with the base 302, retains the metal filter 202. The safety device in this embodiment is represented by the plastic ring 402. This ring 402 is advantageously made in one piece with the annulus 102. The external diameter of the ring 402 is smaller than the internal diameter of the cylinder 3, so leaving a small amount of play 4 between the two parts.

If during operation the outer annulus 102 cracks, the ring 402 becomes subject to fierce, unequal centrifugal forces, causing it to break. It then tends to expand until it reaches the internal surface of the cylinder 3. Frictional forces are then generated between the two touching surfaces, preventing further rotation of the drum 2 and so eliminating the danger of the drum or parts thereof flying out.

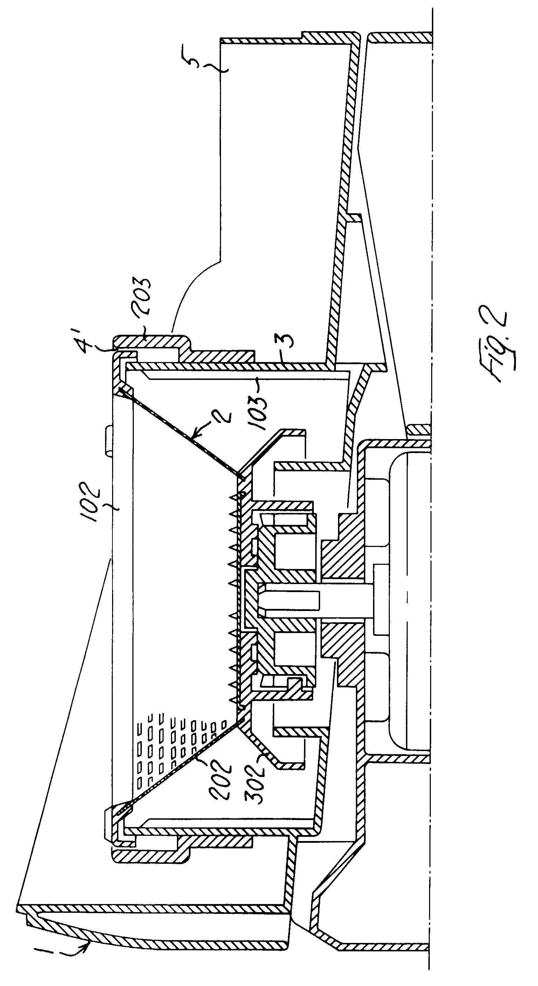

Another embodiment of the device is shown in Figure 2. Identical parts are given the same numerals. In this second case the safety device is represented by the ring 203 located around the outside of the upper part of the cylinder 3. The ring 203 is composed of a lower part that is in contact with the external surface of the cylinder 3 and an upper part whose external diameter is such as to create play in the fit with the lateral surface of the outer annulus 102.

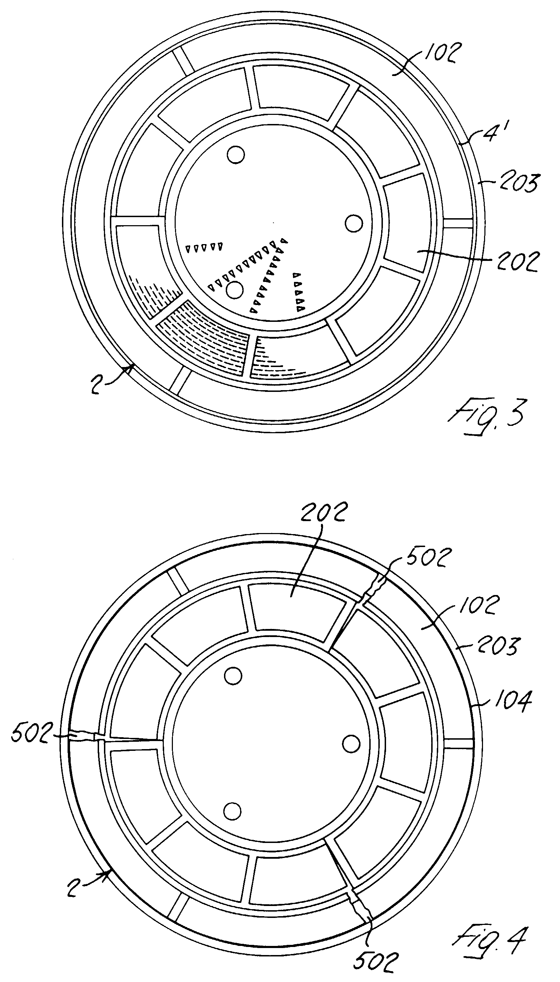

Figure 3 shows a plan view from above of the ring 203, which is concentric with respect to the rim 102 and the play 4' between these.

Figure 4 shows the situation in which the rim 102 has broken at the points 502 under the internal tensions generated by centrifugal forces. The play 4' shown in Figure 3 has disappeared because the rim 102 is now in contact with the ring 203 around the circumference 104. Once again the contact between the two surfaces generates fierce frictional forces which will arrest the rotation of the drum 2 and prevent anything from being flung out with disastrous consequences. The ring 203 may be made in one piece with the cylinder 3 (and hence with the part 5 shown in Figure 2) or may be fitted afterwards. In the latter case the safety device can also be used on already manufactured centrifugal extractors, or extractors actually in service: in this way not only is the safety of the user protected, but also the manufacturer has no need either to withdraw centrifugal extractors already on the market or replace those that have been sold. This would obviously limit the financial losses.

If the cylinder 3 is provided with stiffening ribs 103, these will be on the external surface if the safety device used is in accordance with the first embodiment described (as shown in Figure 1), whereas they will be on the internal surface in the case of the second embodiment described (as shown in Figure 2).

## Claims

1. Method for making a safety system for centrifugal extractors for domestic use, of the type comprising a frustoconical drum composed of two plastic base circles and a perforated frustoconical intermediate wall, characterized in that at least the upper outer annulus, and/or a part attached to it, is completely surrounded at a short distance by a coaxial fixed annular wall forming part of a well into which the said drum is introduced so that, in the event that the upper outer annulus, or the part attached to it, breaks or gives way, it will almost immediately, as it expands, come into contact with the said coaxial wall, generating high frictional forces that will prevent further rotation, and hence bursting, of the drum.

2. Safety device for centrifugal extractors for domestic use of the type comprising a frustoconical drum composed of two plastic base circles and a perforated frustoconical intermediate wall, characterized in that it comprises an annular component joined to the outer annulus which, if the latter breaks, will come into contact with a coaxial wall, generating high frictional forces that will prevent further rotation, and hence bursting, of the drum.

3. Safety device for centrifugal extractors for domestic use according to Claim 2, characterized in that it comprises a ring (402) fixed to the outer annulus (102), its external diameter being such as to create play (4) in the fit with the coaxial cylinder (3); and in that if the outer annulus (102) breaks, the ring (402) will come into contact with the internal surface of the cylinder (3), generating frictional forces that will prevent further rotation of the drum (2) and so eliminate the danger of the latter, or parts thereof, flying out.

4. Safety device for centrifugal extractors for domestic use according to Claim 2, characterized in that it consists of a plastic ring (203) fixed to the external upper surface of the cylinder (3), coaxially with the external lateral surface of the outer annulus (102) and separated from the latter surface by the play (4'); and in that this ring (203) comes into contact with the outer annulus (102), if the latter breaks, and the ring (102) comes into contact with the external surface of the ring (203), generating frictional forces that prevent further rotation of the drum (2) and so eliminating the danger of the drum or parts thereof flying out.

5. Device according to Claim 3, characterized in that the ring (402) may be fixed to the drum (2) or may be made in one piece with the rim (102).

6. Device according to Claim 4, characterized in that the ring (203) may be fixed to the cylinder (3) or may be made in one piece with it.
